# EUROPEAN PATENT APPLICATION

(11) **EP 4 215 038 A1**
(43) Date of publication of application: **26.07.2023**
(21) Application number: 23151949.7
(22) Date of filing: 17.01.2023
(51) Int. Cl.: A01G 9/24, A01G 9/22

(54) **AGRIVOLTAIC SYSTEM**

(30) Priority: 24.01.2022 IT 202200001061
(71) Applicant: Ecobubble S.r.l. Startup Costituita Ai Sensi Dell'Art. 4 Comma 10 Bis D.L. 3/2015 Conv. Con. Legge 33/2015, 00162 Rome (IT); Pallini, Fabio, 20151 Milano (IT)
(72) Inventor: PALLINI, Fabio, 20151 MILANO (IT); NESCATELLI, Nicola, 00100 Rome (IT)
(74) Representative: Bellomia, Paolo

(57) **Abstract**

Described is an agrivoltaic system (100) comprising a supporting structure (200) extending along an axis of extension (X) on an agricultural crop (P) and a plurality of photovoltaic panels (300) which can be oriented around the axis of extension (X) for projecting shade on the agricultural crop (P). The system (100) also comprises an orientation module (301) configured for imparting to the photovoltaic panels (300) a command for rotating about the axis of extension (X), an irrigation device (400) and a dispensing module (401) configured for imparting to the irrigation device (400) a command for dispensing a predetermined quantity of water. The system (100) also comprises a plurality of sensors (501, 502, 503) each configured for measuring an operating parameter indicating a state of health of the agricultural crop (P) and/or an environmental parameter and a cloud processing unit (600) configured for receiving and processing at least the operating parameters and the environmental parameters and for generating and sending, on the basis of the processing, a dispensing command to the dispensing module (401) and a rotation command to the orientation module (301).

## Description

This invention relates to an agrivoltaic system and a method for managing an agrivoltaic system.

The term "agrivoltaic" means an integrated system where the surface of the photovoltaic panels of the system is used both for the production of energy deriving from the sun and as "roof" to protect and manage in terms of shade and irrigation the underlying agricultural crops.

There are currently various agrivoltaic systems, such as, for example, that shown in patent document WO2011/047828A1, wherein the photovoltaic panels can vary their inclination in such a way that, in the case of rain, they can act as devices for collecting and directing rainwater for the underlying crops.

Disadvantageously, according to the prior art agrivoltaic systems the production of energy enters into conflict with the sustainability of an optimum agricultural development and therefore results in many design adaptations on the basis of local climatic conditions, the types of crops and the energy requirement required.

In other words, there are currently no systems which are able to control the movement of the photovoltaic panels in such a way as to optimise the energy production in a way linked to the conditions of vigour of the underlying agricultural crops.

The technical purpose of the invention is therefore to provide an agrivoltaic system and a method for the management of an agrivoltaic system which are able to overcome the drawbacks of the prior art.

The aim of the invention is therefore to provide an agrivoltaic system which is able to manage the movement of the photovoltaic panels in such a way as to produce energy and protect the underlying agricultural crops, thus optimising their vigour.

A further aim of the invention is to provide a method for managing an agrivoltaic system which is able to guarantee an optimum agricultural production and which is able to protect the agricultural crop in the case of adverse weather conditions.

The technical purpose indicated and the aims specified are substantially achieved by an agrivoltaic system and a method for the management of an agrivoltaic system comprising the technical features described in one or more of the appended claims. The dependent claims correspond to possible embodiments of the invention.

Further features and advantages of the invention are more apparent in the non-limiting description which follows of an agrivoltaic system and a method for the management of an agrivoltaic system.

The description is set out below with reference to the accompanying drawings which are provided solely for purposes of illustration without restricting the scope of the invention and in which:

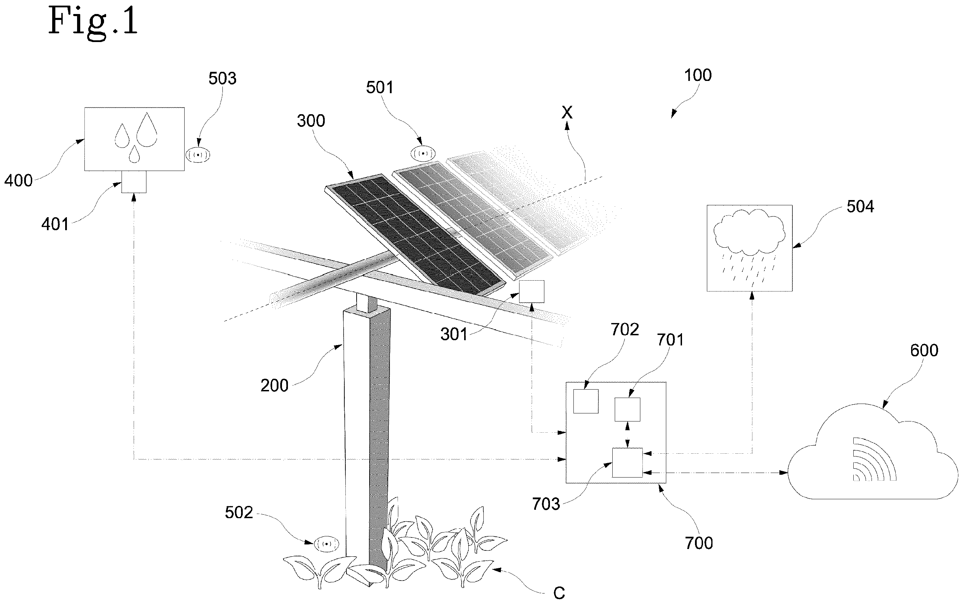

- Figure 1 is a schematic view of the agrivoltaic system according to the invention.

With reference to the accompanying drawings, the numeral 100 denotes an agrivoltaic system comprising a supporting structure 200, for example a frame, extending along an axis of extension "X" on an agricultural crop "P".

The agrivoltaic system 100 also comprises a plurality of photovoltaic panels 300 mounted on the supporting structure 200 and which can be oriented about the axis of extension X for projecting shade on the agricultural crop "P".

According to a possible embodiment, the plurality of photovoltaic panels 300 is mounted in series on the supporting structure 200. Preferably, the photovoltaic panels 300 of the plurality define several parallel rows of photovoltaic panels 300 arranged in series.

According to an aspect of the invention, the system 100 also comprises an orientation module 301 configured for imparting to the photovoltaic panels 300 a command of rotation about the axis of extension "X".

Preferably, the system 100 also comprises at least one motor which can be actuated using the orientation module 301 for orienting the photovoltaic panels 300 on the supporting structure 200.

In this situation, the photovoltaic panels 300 can be oriented in such a way as to vary the shade projected on the agricultural crop "P" or in such a way as to protect the agricultural crop "P" in the case of strong rain or hail.

As shown in Figure 1, the system 100 also comprises an irrigation device 400 configured for dispensing water to the agricultural crop "P".

The system 100 also comprises a dispensing module 401 configured for imparting to the irrigation device 400 a command for dispensing a predetermined quantity of water.

The system 100 also comprises a plurality of sensors 501, 502, 503 each configured for measuring an operating parameter indicating a state of health of the agricultural crop "P" (such as, for example, a moisture content of the substrate of the agricultural crop "P", a irradiance value and the like) and/or an environmental parameter (such as, for example, air humidity, weather conditions and the like). Preferably, at least one sensor 501 of the plurality of sensors 501, 502, 503 is configured for generating a signal representing the irradiation received from the agricultural crop "P" in a predetermined period of time.

Preferably, at least one sensor 502 of the plurality of sensors 501, 502, 503 is configured for generating a signal representing the humidity of a substrate of the agricultural crop "P".

Preferably, at least one sensor 503 of the plurality of sensors 501, 502, 503 is configured for generating a signal representing the quantity of rain falling on the agricultural crop "P" in a predetermined period of time.

Preferably, at least one sensor of the plurality of sensors 501, 502, 503 is configured for generating a signal representing a state of vigour of the agricultural crop "P".

According to an aspect of the invention, the system 100 also comprises a cloud processing unit 600 configured for receiving and processing at least the operating parameters and the environmental parameters and for generating and sending, on the basis of the processing, a dispensing command to the dispensing module 401 and a rotation command to the orientation module 301.

In this situation, on the basis of the processing of at least the operating parameters coming from the sensors 501, 502, 503, the cloud processing unit 600 is able to dispense the correct quantity of water to the agricultural crop "P" and orient the photovoltaic panels 300 in such a way as to obtain at the same time an optimisation of the management and health of the agricultural crop "P" and a good electricity production, as described in detail below.

Preferably, theprocessing unit 600 comprises at least three software modules hosted in cloud services, that is to say, at least three artificial intelligence modules.

In particular, the software modules are designed to apply physical-mathematical models of known type to data acquired by the cloud processing unit 600 to obtain output data, and in particular, data relative to the state of health of the agricultural crop "P".

According to a possible embodiment, a software module is used to continuously improve a duration of rotation of the photovoltaic panels 300. A further software module is used for continuously improving the irrigation duration. A further software module is used to continuously improve the positioning of the photovoltaic panels 300 in such a way that they act as a cover for the agricultural crop "P" in the case of strong rain, hail or excessive sun.

According to a possible embodiment, the system 100 comprises a weather station 504 configured for measuring data relative to the probability of the presence of expected precipitations and/or data relative to the quantity of water expected and sending the data to the cloud processing unit 600.

In this situation, the cloud processing unit 600 processes the data relative to the probability of precipitation and the quantity of water expected to generate and send the dispensing command and the orientation command.

In other words, the cloud processing unit 600 processes both the data coming from the weather station 504 and those coming from the sensors 501, 502, 503 in such a way as to derive the dispensing and orientation commands.

According to the preferred embodiment, the system 100 also comprises a management unit 700 configured for exchanging data and commands between the processing unit 600 and the orientation module 301 and the dispensing module 401.

In use, the sensors 501, 502, 503 each measure, preferably periodically, an operating parameter indicating a state of health of the agricultural crop "P" and/or an environmental parameter and send, for example by Bluetooth or wireless, the values of these parameters to the orientation module 301 and/or to the dispensing module 401. The latter send to the management unit 700 signals representing the parameters received from the sensors 501, 502, 503.

According to a possible embodiment, the sensors 501, 502, 503 are able to send directly to the control unit 700 the values of the parameters.

After the management unit 700 receives the parameters, the management unit 700 sends the signals representing the parameters to the cloud processing unit 600 which processes them for generating operating commands of the system 100.

After the processing by the cloud processing unit 600, the operating commands are sent to the management unit 700 which in turn sends them to the orientation module 301 and to the dispensing module 401 in such a way as to control, respectively, the dynamics of movement of the photovoltaic panels 300 and the quantity of water which is supplied to the agricultural crop "P" using the irrigation device.

Preferably, in order to exchange commands and data between the orientation module 301 and the dispensing module 401 and the cloud processing unit 600, the management unit 700 may comprise an output module (not illustrated) dedicated to the transmitting and receiving.

The management unit 700 acts between the orientation 301 and dispensing 401 modules and the cloud processing unit 600 in such a way that the orientation module 301 and the dispensing module 401 can be actuated in an optimised manner on the basis of the processing of the operating parameters indicating a state of health of the agricultural crop "P" and/or the environmental parameters performed by the cloud processing unit 600.

In other words, on the basis of the processing of at least the parameters measured by the sensors 501, 502, 503, the cloud processing unit 600 is able to control the orientation module 301 in such a way as to orient the photovoltaic panels 300 in an optimum manner with respect to the environmental conditions (for example weather conditions, location of the system 100 and the like) and to the conditions of health of the agricultural crop "P". In the same way, on the basis of the processing of the parameters measured by the sensors 501, 502, 503, the cloud processing unit 600 is able to control the dispensing module 401 in such a way as to dispense an optimum quantity of water with respect to the environmental conditions (for example, humidity, precipitations and the like) and to the conditions of health of the agricultural crop "P".

As shown in Figure 1, the management unit 700 also comprises an interface module 701 configured for allowing the entering of input data by a user. Preferably, the data which can be entered by a user is data relating to the location, height, shape and size, fixed shadow of the area to be cultivated and relating to the type of plants, production, number, wilting percentage and the like.

According to the preferred embodiment, the interface module 701 comprises a screen for displaying an operating status of the system 100.

As shown in Fighter 1, the management unit 700 also comprises a memory module 702 comprising at least identification data of a plurality of plants and a plurality of PAR data (Photosynthetic Active Radiation), each corresponding to one of the identification data.

According to an aspect of the invention, the memory module 702 may also store, for each identification data, information relating to the flowering, cultivation period, harvesting, habitat, parasites and the like.

According to a further aspect of the invention, the memory module 702 may also store external data relative to weather, spectrographic satellite data, energy data, environmental analysis data relative to the zone in which the agricultural crop "P" is located, literature data and the like.

According to the invention, the management unit 700 also comprises a processing module 703 configured for interfacing with the interface module 701 and/or with the memory module 702 and/or with the orientation module 301 and the dispensing module 401.

In particular, the processing module 703 receives the data entered by the user using the interface module 701 and the data sent from the orientation module 301 and from the dispensing module 401 derived from the sensors 501, 502, 503. In this situation, the processing module 703 combines the data with that present in the memory module 702 and sends it to the cloud processing unit 600.

The cloud processing unit 600 processes and manages the data in such a way as to return operating commands to the management module 700 by which the movement of the photovoltaic panels 300 is modulated and by which the dispensing of water by the dispensing device 400 is managed.

In other words, the orientation which the photovoltaic panels 300 must adopt and the quantity of water which the irrigation device 400 must dispense are obtained on the basis of a processing of the values of the parameters measured by the sensors 501, 502, 503, of the data entered by the user and of the stored data of the memory module 702.

In this situation, on the basis of the environmental conditions and the conditions of the agricultural crop "P" it is possible to manage the production of energy, optimising the productivity of the agricultural crop "P".

According to the preferred embodiment, the cloud processing unit 600 also provides values relative to the assets and/or efficiency of the system 100 which can be viewed by a user using the interface module 701.

By way of a non-limiting example, these values may relate to the irradiation received by the agricultural crop "P", to the minimum irradiation, to a parallelism period (that is to say, to the duration of the period calculated in seconds in which the photovoltaic panels 300 must be positioned with the surface parallel to the sun's rays), to the time and to the configuration period of the photovoltaic panels 300 being covered with relative angle of inclination and to the irrigation parameters.

Advantageously, the system 100 described herein is autonomous and its use can be easily scaled as a function of the dimensions of the space to be cultivated and the type of agricultural crop "P".

Advantageously, the system 100 is also easily programmable in partitions to allow autonomous rotation dynamics as a function of the types of agricultural crops "P" beneath.

Advantageously, the system 100 makes it possible to monitor the state of health of the agricultural crop "P" (by acquiring and processing data relative to the state of environmental luminosity, climatic data, data relative to the type of agricultural crop "P" and the like) managing in a simple, efficient and automated manner the movement of the photovoltaic panels 300 and the irrigation steady state of the agricultural crop "P".

Advantageously, the system 100 allows the rotation of the photovoltaic panels 300 to be automated in such a way as to collect as much energy as possible compatible with the optimum conditions of vigour of the plants of the agricultural crop "P". In this way, in an automatic and optimised manner, the agrivoltaic system 100 produces energy, protecting and improving the agricultural yield, reducing ground use and the emission of pollutants into the atmosphere.

The invention also relates to a method for managing an agrivoltaic system 100 comprising a step of preparing an agrivoltaic system 100 as described above and a step of recording, at predetermined time intervals of a calibration period, a plurality of operating parameters.

In particular, in the recording step, the parameters measured by the sensors 501, 502, 503 and the data entered by a user using the interface module 701 are acquired and sent to the processing module 703.

The method then comprises a step of processing the plurality of operating parameters for deriving a state of health of the agricultural crop "P" and a step of comparing the state of health with an optimum state of health.

Subsequently, the method comprises a step of modifying the dispensing and rotation commands, if the comparison shows a state of health of the crop which is not optimum, in such a way as to obtain an optimum state of health.

The method also comprises a step of sending an alarm signal to a user if, after a plurality of successive modifications to the dispensing and orientation commands, the state of health continues to be not optimum.

In other words, each recording step is associated with deriving a state of health of the agricultural crop "P". In this situation, the derived state of health is compared, under equal environmental conditions, with the optimum state. In this way, the cloud processing unit 600 is able to derive, and thus "learn", if the orientation of the photovoltaic panels 300 (and thus the light which irradiates the agricultural crop "P") and/or the irrigation steady state (that is to say, the water dispensed by the irrigation device 400) are correctly set up to have a crop in an excellent health state and how they must be modified in order to reach it.

Below is a non-limiting example for managing the system 100 in which the orientation of the photovoltaic panels 300 is to be managed in such a way as to optimise the vigour of the agricultural crop "P".

Firstly, the management unit 700 processes laboratory and literature data, for example stored in the memory module 702, to derive a minimum irradiance value. In use, when the sensor of the plurality of sensors 501, 502, 503, designed to measure the irradiation, finds an irradiance value less than the minimum value, the cloud processing unit 600 calculates a period of rotation of the photovoltaic panels 300 in such a way as to impart to the orientation module 402 the command to rotate the photovoltaic panels 300 until they are parallel to the sun's rays returning the detected irradiance value above the minimum. In this situation, the parameters acquired by the sensors 501, 502, 503 and the data if necessary entered by a user using the interface module 701 are stored by the memory module 703 for training the cloud processing unit 600. At the same time, the state of health of the agricultural crop "C" is derived, stored in the memory module 703 and compared with the optimum state of health.

After a certain number of data collection cycles, the state of health can continue to shift from the optimum state of health and this indicates that, under these environmental variables, there could be stress due to a poor luminosity.

In this situation, from the subsequent data collection cycle, the orientation of the photovoltaic panels 300 (that is, the irradiation) is varied with new values. These values together with the n-ple of the parameters recorded by the other sensors 501, 502, 503 are stored and, if they lead to an optimum state of health, they are taken as subsequent parametric calibration. If, on the other hand, the optimum state of health were not obtained, the orientation of the photovoltaic panels 300 is varied again in an iterative manner.

After a predetermined number of iterations without success, the system 100 it sends a warning that the optimum state of health has not been reached.

The same iterative process can also be implemented in order to understand how much water must be supplied by the irrigation device 400 in order to have agricultural crops "P" having a state of health greater than the optimum state of health.

The invention achieves the preset aims eliminating the drawbacks of the prior art. In particular, the invention makes it possible to obtain a system designed with an artificial intelligence logic which is able to control the movement of the photovoltaic panels 300 in such a way as to optimise the production of energy in a way linked to the state of health of the underlying agricultural crop "P".

## Claims

1. An agrivoltaic system (100) comprising:
- a supporting structure (200) extending along an axis of extension (X) on an agricultural crop (P);
- a plurality of photovoltaic panels (300) mounted on said supporting structure (200) and which can be oriented about the axis of extension (X) for projecting shade on the agricultural crop (P);
- an orientation module (301) configured for imparting to the photovoltaic panels (300) a command of rotation about the axis of extension (X);
- an irrigation device (400) configured for dispensing water to said agricultural crop (P);
- a dispensing module (401) configured for imparting to the irrigation device (400) a command for dispensing a predetermined quantity of water;
- a plurality of sensors (501, 502, 503) each configured for measuring an operating parameter indicating a state of health of the agricultural crop (P) and/or an environmental parameter;
- a cloud processing unit (600) configured for receiving and processing at least the operating parameters and the environmental parameters and for generating and sending, on the basis of said processing, a dispensing command to said dispensing module (401) and a rotation command to said orientation module (301).

2. The system according to claim 1, comprising a management unit (700) configured for exchanging data and commands between said processing unit (600) and said orientation module (301) and dispensing module (401).

3. The system according to claim 2, wherein said management unit (700) comprises:
- an interface module (701) configured to allow the entering of input data by a user, said interface module (701) comprising a screen for displaying an operating status of the system (100);
- a memory module (702) comprising at least identification data of a plurality of plants and a plurality of PAR data (Photosynthetic Active Radiation), each corresponding to one of said identification data;
- a processing module (703) configured to interface with said interface module (701) and/or with the memory module (702) and/or said orientation module (301) and dispensing module (401) in such a way as to recognise the type of agricultural crop by comparing the input data and said identification data.

4. The system according to any one of the preceding claims, wherein said processing unit (600) comprises at least three software modules hosted in cloud services.

5. The system according to any one of the preceding claims, wherein at least one sensor (501) of said plurality of sensors (501, 502, 503) is configured for generating a signal representing the irradiation received from said agricultural crop (P) in a predetermined period of time.

6. The system according to any one of the preceding claims, wherein at least one sensor (502) of the plurality of sensors (501, 502, 503) is configured for generating a signal representing the humidity of a substrate of said agricultural crop (P).

7. The system according to any one of the preceding claims, wherein at least one sensor (503) of the plurality of sensors (501, 502, 503) is configured for generating a signal representing the quantity of rain falling on said agricultural crop (P) in a predetermined period of time.

8. The system according to any one of the preceding claims, comprising a weather station (504) configured for measuring data relative to the probability of presence of expected rainfall and/or data relative to the expected quantity of water and sending the data to the processing unit in the cloud (600), said processing unit in the cloud (600) also processing said data relative to the probability of rainfall and the quantity of water expected to generate and send said dispensing command and said orientation command.

9. The system according to any one of the preceding claims, wherein said plurality of photovoltaic panels (300) is mounted in series on said supporting structure (200), preferably said plurality of photovoltaic panels (300) defining several rows parallel to each other of photovoltaic panels (300) arranged in series.

10. A method for managing an agrivoltaic system (100) comprising the steps of:
- preparing an agrivoltaic system (100) according to any one of the preceding claims;
- recording, at predetermined time intervals of a calibration period, a plurality of operating parameters;
- processing said plurality of operating parameters for deriving a state of health of the agricultural crop (P);
- comparing said state of health with an optimum state of health;
- modifying said dispensing and rotation commands, if said comparison shows a state of health of the crop which is not optimum, in such a way as to obtain an optimum state of health;
- sending an alarm signal to a user if, after a plurality of successive modifications to said dispensing and orientation commands, said state of health continues to be not optimum.
